# EUROPEAN PATENT APPLICATION

(11) **EP 4 043 224 A1**
(43) Date of publication of application: **17.08.2022**
(21) Application number: 22150585.2
(22) Date of filing: 07.01.2022
(51) Int. Cl.: B41J 3/36, B41J 3/407, B41M 7/00, C09D 11/50, G06K 17/00, B41J 3/50, B41J 11/00

(54) **MOBILE PRINTER**

(30) Priority: 12.02.2021 JP 2021020522
(71) Applicant: Toshiba TEC Kabushiki Kaisha, Tokyo 141-8562 (JP)
(72) Inventor: Hiyoshi, Yui, Shinagawa-ku, Tokyo 141-8562 (JP); Kiyomoto, Hiroshi, Shinagawa-ku, Tokyo 141-8562 (JP); Miyoshi, Maiko, Shinagawa-ku, Tokyo 141-8562 (JP); Fukazawa, Taishi, Shinagawa-ku, Tokyo 141-8562 (JP); Kitawaki, Takaya, Shinagawa-ku, Tokyo 141-8562 (JP); Ishikawa, Daisuke, Shinagawa-ku, Tokyo 141-8562 (JP)
(74) Representative: Bandpay & Greuter

(57) **Abstract**

According to one embodiment, a mobile printer, includes an RFID writer capable of writing information to an RFID tag, such as one embedded in a merchandise tag or price tag. The mobile printer additionally includes a print head storing decolorable ink that can be made substantially invisible or indistinguishable on a merchandise tag or price tag. The print head is configured to discharge decolorable ink for printing information on a merchandise tag or price tag. The decolorable ink can be discolored/decolored after being used to print information on a merchandise tag or price tag to permit information on the merchandise tag or price tag to be changed after an initial printing.

## Description

### FIELD

Embodiments described herein relate generally to a mobile printer.

### BACKGROUND

In order to manage articles, such as retail merchandise or the like, an automatic recognition system using radio frequency identification (RFID) tags or the like has been introduced. In such a method of managing such articles, an RFID reader/writer can be used to write individual identifying information into an RFID tag that has been attached to the article. An RFID reader/writer can then be used to read the individual identifying information previously stored in the RFID tag by wireless communication. There are also cases where the RFID tag is attached to a medium, such as a merchandise label or price tag, having also thereon visual information, such as text. When changing the price of such labeled or tagged articles, both an RFID writer and a text printer may be required to rewrite the information of the RFID tag and the visual information.

### BRIEF DESCRIPTION OF THE DRAWINGS

FIG. 1 is a perspective view illustrating aspects related to a printer according to an embodiment.
FIG. 2 is a side view of the printer according to the embodiment.
FIG. 3 is a bottom view of the printer according to the embodiment.
FIG. 4 is an explanatory view illustrating aspects related to a decoloring process using the printer according to the embodiment.
FIG. 5 is another explanatory view illustrating aspects related to a printing process of the printer according to the embodiment.
FIG. 6 is a side view illustrating of a printer according to another embodiment.

### DETAILED DESCRIPTION

At least one embodiment of the present disclosure provides a mobile printer capable of writing RFID data and also printing visual information.

In general, according to one embodiment, a mobile printer includes an RFID writer capable of writing information to an RFID tag. The mobile printer also includes a print head configured to store decolorable ink. The print head is configured to discharge decolorable ink for printing information on a print medium, comprising for example a merchandise price tag or the like.

Preferably, the decolorable ink discolors with heat.

Preferably, the decolorable ink discolors with ultraviolet light.

Preferably, the mobile printer further comprises a discoloring unit configured to discolor the decolorable ink.

Preferably, the discoloring unit comprises a rubber member.

Preferably, the discoloring unit comprises a heating element.

Preferably, the discoloring unit comprises an ultraviolet light source.

Preferably, the mobile printer further comprises a position sensor configured to detect a relative position of the print head with respect to a print medium.

Preferably, the mobile printer further comprises a housing having a first side and second side, wherein the print head is on the first side, and the RFID writer is on the second side.

Preferably, the mobile printer further comprises a plurality of rollers on the first side.

Preferably, the position sensor is configured to detect the relative position of the print head with respect to the print medium based on rotation of at least one of the plurality of rollers.

Preferably, the mobile printer further comprises an input unit on the second side.

Preferably, the mobile printer is configured as a merchandise tag rewriting printer. The housing is configured to be hand-held sized, and the print head is configured to discharge the decolorable ink onto a merchandise tag disposed to face the first side of the housing.

Preferably, the plurality of rollers on the first side of the housing is configured to guide the merchandise tag past the print head.

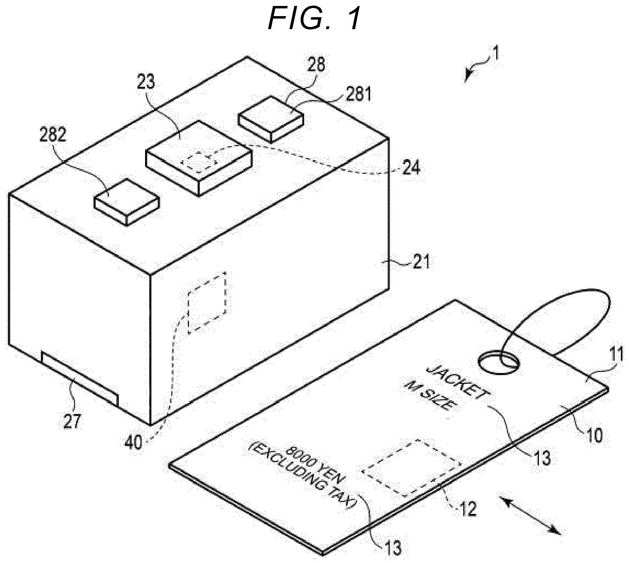

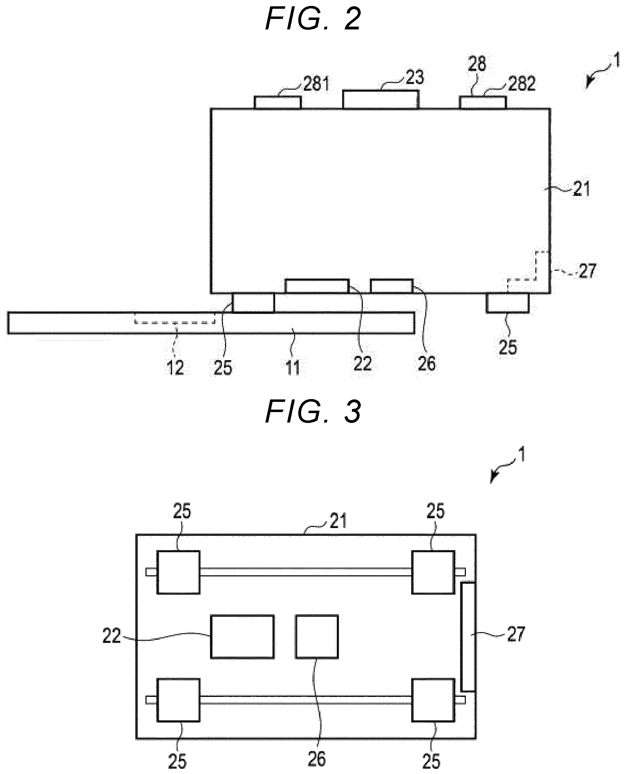

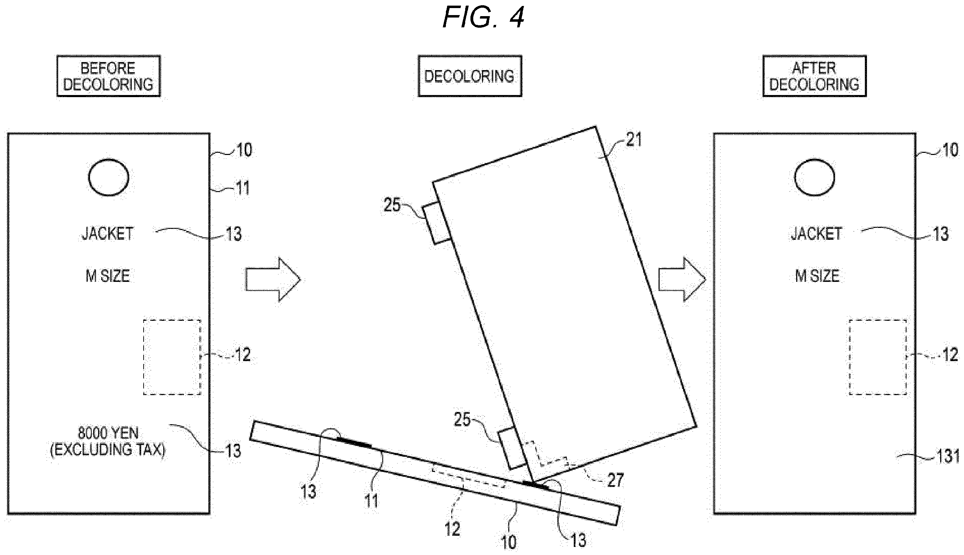

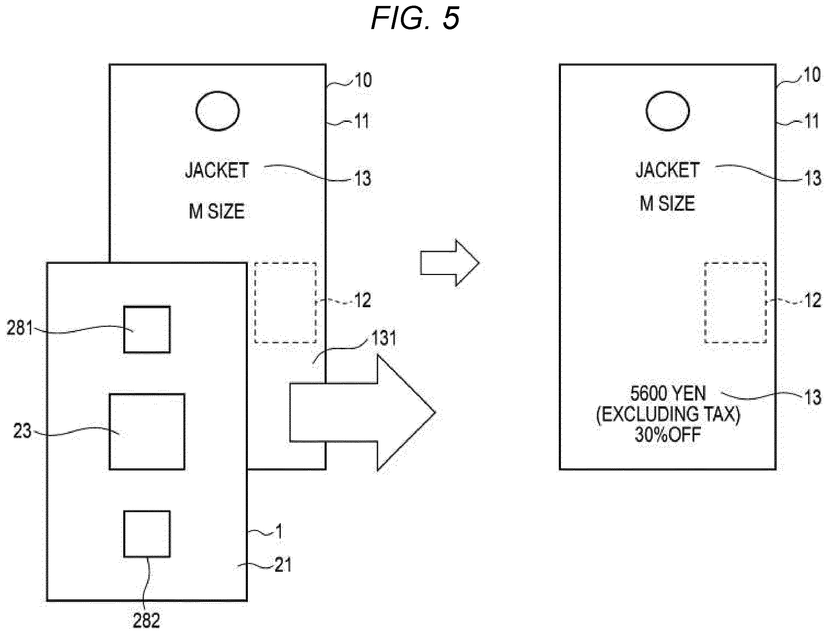

A printer 1 according to a first embodiment will be described with reference to FIGS. 1 to 5. FIG. 1 is a perspective view illustrating a configuration of the printer of the first embodiment. FIG. 2 is a side view of the printer of the first embodiment. FIG. 3 is a bottom view of the printer of the first embodiment. FIG. 4 is an explanatory view illustrating a decoloring process using the printer of the first embodiment. FIG. 5 is an explanatory view illustrating a printing process of the printer of the first embodiment. The printer 1 is, for example, a mobile printer that can be gripped with one hand. The printer 1 may thus also be referred to as a hand-held printer or the like.

As illustrated in FIGS. 1 to 3, the printer 1 includes a housing 21, an ink jet head 22 for performing printing on a tag sheet 10, an RFID reader-writer 23, an antenna 24 (provided in the RFID reader-writer 23, in this example), moving rollers 25, a motion sensor 26, a decoloring member 27, an input unit 28, and a control unit 40. The printer 1 also incorporates an interface for exchanging information with the outside.

The tag sheet 10 is a merchandise tag that can be or is presently attached to an item of merchandise. The tag sheet 10 is, for example, operated on while on the outside the housing 21. The tag sheet 10 includes a base 11 (base material), an RFID tag 12 embedded in the base 11, and a text region 13 provided on the base 11.

The base 11 is a printable material such as paper or cardstock. The RFID tag 12 is installed in a predetermined area of the base 11. The text region 13 is printable region on the surface of the base 11 on which visual information such as a price can be printed.

The RFID tag 12 in this example is a passive type RFID tag and includes a built-in memory for recording data therein. The RFID tag 12 is configured to permit reading, writing, and rewriting data to and from the built-in memory according to radio waves output from the antenna 24 of the RFID reader-writer 23.

The text region 13 is provided on the surface of the base 11, and visual information can be printed thereon. For example, a merchandise name, descriptive details for the particular item of merchandise, the item price, and the like are displayed on the text region 13. There may be multiple text regions 13 on the surface(s) of the base 11.

The housing 21 is made of, for example, a resin material. The housing 21 has a size and shape that can be gripped by a user with one hand, for example. In the present example, the housing 21 has a rectangular parallelepiped outer shape.

The ink jet head 22 is provided on the bottom surface side of the housing 21. This bottom surface side of the housing may also be referred to as a print surface side.

A decoloring member 27 is provided at a corner or edge portion where the bottom surface and a side surface of the housing 21 meet. On the upper surface of the housing 21, the RFID reader-writer 23 and the input unit 28 (including input buttons 281 and 282) are provided.

The ink jet head 22 is a liquid discharge apparatus that discharges, in this example, ink that visually deteriorates (e.g., disappears or becomes substantially invisible) upon application of heat. The ink jet head 22 includes a plurality of discharge nozzles, a plurality of driving elements driven by the control of the control unit 40, and an ink tank. The ink tank stores the visually deteriorating ink (decolorable ink) therein. The discharge nozzles are arranged on the printing surface side of the housing 21, and the printing process is performed by discharging ink from these discharge nozzles onto the tag sheet 10 disposed to face the print surface side.

In the present embodiment, as an example of visually deteriorating ink, a heat-discoloring ink is used. A heat-discoloring ink changes colors, loses color, or otherwise becomes visually indistinct from the surrounding print region 13 upon heating. The heat-discoloring ink may be referred to as a decolorable ink in some instances. Therefore, in the present example, the ink jet head 22 can be considered to print temporary visual information with a decolorable ink. Here, the temporary visual information is information that can be visually recognized until a decoloring process is performed thereon. In general, the printed temporary visual information is used for such information types that may be expected to change over time, such as a price on a merchandise price tag or the like. A decolorable ink can be a thermochromic ink. The change in color of a decolorable ink may or may not be reversable with heating or cooling.

The RFID reader-writer 23 includes an antenna 24. The RFID reader-writer 23 performs a process of reading data from the RFID tag 12 and a process of writing data to the RFID tag 12. The antenna 24 is driven by the RFID reader-writer 23 and outputs and receives a magnetic field or radio waves for reading or writing data from and to the built-in memory of an RFID tag 12. The RFID reader-writer 23 is disposed, for example, on the surface of the housing 21 opposite from the printing surface.

At least one roller 25 is provided. In the present example, four rollers 25. Pairs of rollers 25 are supported a support rod (axial) extending in a direction orthogonal to the primary moving (rolling) direction. The moving rollers 25 guide the tag sheet 10 along a predetermined transport direction orthogonal. The moving rollers 25 is disposed at a position facing the tag sheet 10 for printing, and regulates the relative movements between the tag sheet 10 and the housing 21. At least one moving roller 25 is connected to the motion sensor 26. The motion sensor 26 measures the amount of rotation of the moving roller(s) 25.

The motion sensor 26 is disposed in the vicinity of the moving roller(s) 25. The motion sensor 26 serves to detect the amount of movement of the housing 21 with respect to a tag sheet 10 or the like and thus provides positional information by detecting the amount of rotation of the moving roller(s) 25 or the like. The motion sensor 26 detects, for example, provides positional information permitting printing of text information on the tag sheet 10 in an appropriate manner. The motion sensor 26 is connected to the control unit 40 and outputs data related to the amount of movement to the control unit 40 for purposes of control of various functions.

The decoloring member 27 is disposed on the outer surface of the housing 21. In the first embodiment, the decoloring member 27 is, for example, a rubber material that generates heat by friction when rubbed against a tag sheet 10 or the like. The decoloring member 27 exposed on the outer surface of the housing 21. For example, the decoloring member 27 is disposed at a corner portion between the bottom surface portion and the side surface portion of the housing 21. For example, the outer surface of the decoloring member 27 may protrude outward from the outer surface of the housing 21.

The input unit 28 includes, for example, a plurality of input buttons. The input unit 28 permits the user to input various instructions to the mobile printer 1. For example, as the input unit 28, a print instruction button 281 for instructing a printing process, a power button 282 for turning on and off the power, and the like are provided. The input unit 28 is not limited to physical buttons, nor to just the print instruction button 281 and the power button 282.

The control unit 40 comprises, for example, a processing circuit such as a processor. The control unit 40 is a controller that controls each sub-unit of the printer 1 in order to realize the various described functions of the printer 1. In general, the control unit 40 functions in this manner according to a control program, control data, and the like.

The control unit 40 controls operations and/or functions according to, for example, an operating system or an application program stored in a memory or storage unit. For example, the control unit 40 performs a printing process on a medium by driving the ink jet head 22 according to a print driver or the like. Furthermore, the control unit 40 controls the RFID reader-writer 23 to perform a writing process to the RFID tag 12. In such a case, the antenna 24 supplies radio waves for accessing the internal memory of the RFID tag 12 to write information therein.

The printing process by the ink jet head 22 and the data writing process by the RFID reader-writer 23 on the RFID tag 12 can be performed simultaneously, back-to-back in series, and separately.

The printing process and the data writing process will be described with reference to FIGS. 4 and 5. In the present embodiment, the printer 1 performs the decoloring process, the printing process, and the writing process of the RFID tag 12. For example, after first performing the decoloring process (FIG. 4), the printing process and the writing process are then performed in this order in quick succession (FIG. 5).

As illustrated in FIG. 4, since the printing in the text region 13 ("8000 YEN (EXCLUDING TAX)") of the tag sheet 10 has been previously performed with decolorable ink, the user first performs the decoloring process on the tag sheet to decolor/discolor the text region 13, which now becomes a printing target region 131.

In the decoloring process, by rubbing a predetermined location of the text region 13 with the decoloring member 27 (which is a rubber member disposed at the corner of the housing 21), heat of friction is generated, and the color of the decolorable ink, which is a heat-discoloring ink, is erased (decolored/discolored) .

As illustrated in FIG. 4, after the decoloring process, part of the text region 13 is erased (decolored/discolored), and now becomes a printing target region 131 on which another printing is now possible. For example, in the example illustrated, the text of "8000 YEN (EXCLUDING TAX)" indicating the merchandise price before an intended discount is removed by the decoloring process.

When rewriting the visual information or internal data printed on the tag sheet 10, the user inputs a printing instruction or a data rewriting instruction by operating the print instruction button 281 and/or the power button 282 of the input unit 28. For example, the printed content and the RFID written content are the same data or data corresponding to or otherwise related to each other. In other words, the output based on the same numerical data is performed by both the ink jet head 22 and the RFID reader-writer 23.

In the example illustrated in FIG. 5, the text of "5600 yen (excluding tax) ", which is the new price after the discount, is printed on the tag sheet 10 by the ink jet head 22. The same numerical value "5600" is also then written to the internal memory of the RFID tag 12 of the tag sheet 10.

As a printing process, when the printing instruction is detected, for example, based on the print data sent via the input unit 28 or from an external device, the control unit 40 drives the ink jet head 22 by outputting a driving signal to the head driving circuit, and discharges decolorable ink to perform the printing process. For this process, the user grips the housing 21, disposes the ink jet head 22 to face the tag sheet 10, and brings the moving roller 25 into contact with the tag sheet 10. Then, the housing 21 is moved with respect to the tag sheet 10 in a predetermined moving direction. The moving direction can be regulated to be in one direction by the moving roller(s) 25. During the printing process, the control unit 40 detects the amount of movement (position information) by using the output of the motion sensor 26, which corresponds to the amount of rotation of the moving roller(s) 25. The control unit 40 controls the timing of liquid discharge (from the ink jet head 22) based on the detected position information. For example, with the decoloring process and the printing process illustrated in FIGS. 4 and 5, it is possible to perform rewriting on a part of the text region 13 on the tag sheet 10.

As the rewriting process of the RFID tag 12, based on rewriting data sent via the input unit 28 or from an external device, the control unit 40 drives the RFID reader-writer 23. The reader-writer 23 outputs radio waves from the antenna 24 to rewrite the data in the RFID tag 12 when the RFID tag 12 is disposed in a writable range. At this time, for example, the user places the RFID tag 12 within the range in which the RFID data can be written. The range depends on the intensity of radio waves output from the antenna 24. For example, if the user holds the tag sheet 10 over the reader-writer 23, the data is written. The order of the RFID writing process, the decoloring process, and the text printing process may be reversed or the processes may be performed at substantially the same time or in quick succession. For example, decoloring and printing may be performed after an RFID data writing process, or RFID data may be written between the decoloring and printing processes. In some instances, the RFID data writing process or the text printing process may be performed without performing the decoloring process.

According to the printer 1 of the first embodiment, it is possible to efficiently perform the writing process for the RFID data and the printing process for the visual information. The printer 1 of the first embodiment integrates an ink jet head 22 that performs a text printing process and an RFID reader-writer 23 that writes data to an RFID tag 12. Accordingly, by using an integrated device, labels, price tags, and other printing media having an embedded or affixed RFID tag 12, it is possible to continuously perform the necessary processes efficiently. For example, when reducing or altering the price of items of merchandise already on display at a retail store, it is possible to change the data in the RFID tags 12 of the tag sheets 10 already attached to each item of merchandise to data corresponding to the new price, and to speedily and accurately perform the work of changing the displayed price in a text region 13 of the tag sheets 10. Since the displayed content of the text region 13 and the recorded data of the RFID tag 12 can be rewritten at the same time or during the same short period by using a single device, it is easier to make sure the RFID data and the displayed price on the merchandise tag correspond to each other, and for example, compared to a case of performing these processes by using different devices, it becomes possible to more efficiently and accurately perform the rewriting process and to prevent erroneous display of merchandise prices.

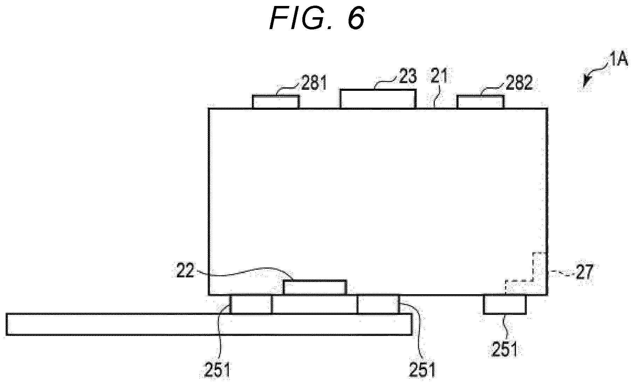

The present disclosure is not limited to the above-described first embodiment, and configuration of each described part may be modified in various manners . For example, in the first embodiment, a total of four moving rollers 25 arranged in two rows, but the number and arrangement of the moving rollers 25 can be changed. For example, as a second embodiment, a printer 1A illustrated in FIG. 6 has a total of six moving rollers 251 in three rows in the longitudinal direction of the housing 21.

Furthermore, in the above-described embodiments, the deteriorating ink is a heat-discoloring ink, but the embodiments are not limited thereto and different ink types may be used in some instances. For example, the deteriorating ink may be ink that discolors in response to light such as UV light. In such a case, the decoloring member 27 may be or incorporate an illumination source that emits light for decoloring the deteriorating ink.

The decoloring member 27 for heating deteriorating ink is not limited to a friction member as described above. The decoloring member 27 incorporate a heat source such as a heater or heating element that generates heat.

In an above-described embodiment, a mechanical structure that detects the position information (moving distance) from the amount of rotation of a moving roller 25, but the present disclosure is not limited thereto. For example, an optical sensor may be provided as a position sensor or a position information detection unit.

The RFID reader-writer 23 is disposed on the upper surface side of the housing 21 in the above-described examples, but the present disclosure is not limited thereto. For example, the RFID reader-writer 23 may be disposed on the printing surface side along with the ink jet head 22. In such a case, the printing process and the RFID data writing process may be more easily performed at the same time or in quick succession. The RFID reader-writer 23 having both a reading function and writing function was illustrated, but in other examples, the reader-writer 23 may lack the reading function. In such a case, the reader-writer 23 may be referred to as a RFID tag writer or the like.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A mobile printer, comprising:
an RFID writer capable of writing information to an RFID tag; and
a print head configured to store and discharge decolorable ink.

2. The mobile printer according to claim 1, wherein the decolorable ink discolors with heat.

3. The mobile printer according to claim 1 or 2, wherein the decolorable ink discolors with ultraviolet light.

4. The mobile printer according to any one of claims 1 to 3, further comprising:
a discoloring unit configured to discolor the decolorable ink.

5. The mobile printer according to claim 4, wherein the discoloring unit comprises a rubber member.

6. The mobile printer according to claim 4 or 5, wherein the discoloring unit comprises a heating element.

7. The mobile printer according to any one of claims 4 to 6, wherein the discoloring unit comprises an ultraviolet light source.

8. The mobile printer according to any one of claims 1 to 7, further comprising:
a position sensor configured to detect a relative position of the print head with respect to a print medium.

9. The mobile printer according to any one of claims 1 to 8, further comprising:
a housing having a first side and second side, wherein
the print head is on the first side, and
the RFID writer is on the second side.

10. The mobile printer according to claim 9, further comprising:
a plurality of rollers on the first side.

11. The mobile printer according to claim 10 depending on claim 8, wherein the position sensor is configured to detect the relative position of the print head with respect to the print medium based on rotation of at least one of the plurality of rollers.

12. The mobile printer according to any one of claims 9 to 11, further comprising:
an input unit on the second side.

13. The mobile printer according to any one of claims 9 to 12 configured as a merchandise tag rewriting printer,
wherein the housing is configured to be hand-held sized, and
the print head is configured to discharge the decolorable ink onto a merchandise tag disposed to face the first side of the housing.

14. The merchandise tag rewriting printer according to claim 13 depending on claim 10, wherein the plurality of rollers on the first side of the housing is configured to guide the merchandise tag past the print head.
